# EUROPÄISCHE PATENTSCHRIFT

(11) **EP 3 901 621 B1**
(45) Veröffentlichungstag und Bekanntmachung des Hinweises auf die Patenterteilung: **04.05.2022**
(21) Anmeldenummer: 20170835.1
(22) Anmeldetag: 22.04.2020
(51) Int. Cl.: G01N 21/79, G01N 31/16

(54) **VORRICHTUNG UND VERFAHREN ZUR BESTIMMUNG VON FLÜSSIGKEITSSPEZIFISCHEN PARAMETERN UND/ODER BESTANDTEILEN**
APPARATUS AND METHOD FOR DETERMINING LIQUID-SPECIFIC PARAMETERS AND / OR COMPONENTS
DISPOSITIF ET PROCÉDÉ DE DÉTERMINATION DES PARAMÈTRES ET/OU DES INGRÉDIENTS SPÉCIFIQUES AUX LIQUIDES

(43) Veröffentlichungstag der Anmeldung: 27.10.2021
(73) Patentinhaber: Safechem Europe GmbH, 40474 Düsseldorf (DE)
(72) Erfinder: LUKOWSKI, Dieter, 47608 Geldern (DE); VICIER, Camille, 40476 Düsseldorf (DE)
(74) Vertreter: Geitz Truckenmüller Lucht Christ

(56) Entgegenhaltungen:
- CN-A- 102 103 089
- US-A1- 2004 023 405
- US-A1- 2013 217 134
- US-B2- 8 236 564
- US-B2- 9 765 616
- LIMA RICARDO ALEXANDRE C ET AL: "Digital movie-based on automatic titrations", TALANTA, Bd. 147, 25. September 2015 (2015-09-25), Seiten 226-232, XP029306861, ISSN: 0039-9140, DOI: 10.1016/J.TALANTA.2015.09.053
- KARLHEINZ LAUBE: "Analysenautomaten in der Meß - und Regeltechnik", GALVANOTECHNIK,, Bd. 61, Nr. 3, 15. März 1970 (1970-03-15), Seiten 197-203, XP001334272,

## Beschreibung

Die Erfindung betrifft eine Vorrichtung sowie ein Verfahren zur Bestimmung von flüssigkeitsspezifischen Parametern und/oder Bestandteilen einer Probe unter Verwendung einer Titrationseinheit, eines Indikators, eines Reagenzes und einer Messkammer.

Aus dem Stand der Technik ist unter anderem das deutsche Patent DE 10 2005 027 590 A1 vorbekannt, das einen Prozessanalyseautomaten mit optischer Farbdetektion offenbart. Dieser funktioniert nach dem Prinzip eines Titrators oder eines Photometers und kann Wasserinhaltsstoffe analysieren. Der Prozessanalyseautomat zeichnet sich dadurch aus, dass bei der Titration einer Messwasserprobe mit einer speziell auf die Messaufgabe abgestimmten Bestimmungsreagenz und der Bestimmung des Messwertes die Erfassung des Umschlagpunktes mittels optischer Farbdetektion erfolgt. Die so erhaltenen Messwerte werden durch einen Mikroprozessor ermittelt und ausgewertet, wobei hierdurch eine Steuerung und Regelung verfahrenstechnischer Prozesse ermöglicht wird.

Weiterhin ist aus der EP 0 043 893 B1 eine Vorrichtung zur Regulierung der Bestandteile einer Abscheidungslösung in einem Abscheidungsbad offenbart. Diese umfasst einen in dem Bad hängenden Sensor, der auf die Konzentration einer oder mehrerer der Komponenten in der Lösung anspricht und ein Signal erzeugen kann, wodurch eine Pumpe eine Nachfülllösung in das Bad einleitet, um die jeweiligen fehlenden Komponenten innerhalb des Bades wieder auszugleichen.

Ferner ist aus der US 2013/0217134 eine Vorrichtung zur Überwachung einer Beschichtungsmateriallösung bekannt, welche mit Hilfe eines Titrationsverfahren überprüft wird. Dabei wird bei dem Titrationsverfahren ein Volumen der Beschichtungslösung mit einer Reagenzlösung zur Bildung eines Gemisches in Kontakt gebracht, wobei zur Ermittlung der Farbänderung während der Titration eine Farbverarbeitungsvorrichtung verwendet wird, um den Endpunkt der Titration bestimmen zu können.

Auch die CN 102103089 A offenbart eine Endpunkt-bestimmende Titrationsvorrichtung zur Bestimmung der Konzentration von Fettsäuren in Getreide.

Aus der Veröffentlichung von Lima et al1 ist die Verwendung einer Webcam zur Detektion des Farbverlaufs innerhalb eines Titrationsprozesses offenbart. Hierbei wir mittels der durch die Webcam aufgenommenen einzelnen Bild-Frames der Farbverlauf während der automatisierten Titration detektiert und ausgewertet.

Die US 8,236,564 B2 offenbart eine Vorrichtung zur Bestimmung von Parametern und der Verträglichkeit einer Substanz, beispielsweise Asphalt oder einer anderen erdölbasierten Substanz, wobei eine Titration zur exakten Bestimmung von einen oder mehrere Flockungsmöglichkeiten verwendet wird, die besonders
¹Ricardo Alexandre C. Lima, Luciano F. Almeida, Wellington S. Lyra, Lucas A. Siqueira, Edvaldo N. Gaiäo, Sergio S.L. Paiva Junior, Rafaela L.F.C. Lima, Digital movie-based on automatic titrations, Talanta, Volume 147, 2016, Pages 226-232, ISSN 0039-9140, https://doi.org/10.1016/j.talanta.2015.09.053. für die Bestimmung von Heithaus-Parametern und der optimalen Mischung verschiedener Asphaltmaterialien geeignet ist.

Auch die US 2004/0023405 A1 offenbart eine Methode und Vorrichtung zur kontinuierlichen Titration, bei der mindestens ein Parameter von mindestens einer Verbindung in einer Mischung überwacht werden kann, während die Zusammensetzung der Mischung kontinuierlich variiert wird.

Ausgehend von diesem Stand der Technik liegt der Erfindung die Aufgabe zu Grunde, eine Vorrichtung sowie ein Verfahren bereitzustellen, mit welcher flüssigkeitsspezifische Parameter und/oder Bestandteile einer Probe automatisiert festgestellt und Handlungsanweisungen ausgegeben bzw. selbsttätig durchgeführt werden können. Diese Aufgabe wird mittels einer Vorrichtung gemäß dem unabhängigen Anspruch 1 und einem Verfahren gemäß dem unabhängigen Anspruch 17 gelöst. Weitere vorteilhafte Ausgestaltungen können den abhängigen Ansprüchen entnommen werden. Erfindungsgemäß handelt es sich um eine Vorrichtung zur Bestimmung von flüssigkeitsspezifischen Parametern und/oder Bestandteilen einer Lösung, umfassend eine Probe von einer zu bestimmenden Lösung, eine Titrationseinheit, einen Indikator sowie ein hierzu komplementäres Reagenz. Diese Probe, bevorzugt eine Probe einer Lösung eines Reinigungsbades, welche insbesondere gelöste Bestandteile beinhalten kann, kann dabei mittels eines Rührers homogen durchmischt werden. Durch eine aus dem Stand der Technik bekannten Titrationseinheit kann zu dieser homogen gerührten Lösung ein Indikator und/oder ein Reagenz hinzugegeben werden, so dass abhängig vom hinzugegebenen Indikator und/oder Reagenz, dem verwendeten Lösungsmittel, den flüssigkeitsspezifischen Parametern und den einzelnen gelösten Bestandteilen der Probe, innerhalb der Probenlösung eine charakteristische Farbe auftritt. Die Erfindung zeichnet sich dadurch aus, dass diese Farbe bzw. Farbänderung anschließend mit einer außerhalb der Messkammer angeordneten RGB-Kamera detektierbar ist. Die mittels der RGB-Kamera ermittelten Daten, insbesondere in Form von Bildern, können anschließend an eine Rechnereinheit weitergeleitet werden, in welcher diese Daten dann mit einer Referenzdatenbank verglichen und entsprechend ausgewertet werden können. Damit können insbesondere Lösungsbestandteile, die Reinheit von Lösungen bzw. Lösungsmitteln sowie weitere flüssigkeitsspezifische Parameter bestimmt werden. Letztlich können, basierend auf der zuvor durchgeführten Auswertung, Handlungsanweisungen ausgegeben werden. Diese können insbesondere die Anweisung zur Zugabe von Lösungsbestandteilen zur Stabilisierung einer Lösung bzw. eines Lösungsbades, der Austausch der Lösung - da Verunreinigungen, z.B. Abbauprodukte, festgestellt wurden - sowie die Ausgabe eines Messprotokolls sein. Bevorzugt können, basierend auf den von der Vorrichtung ausgegebenen Handlungsanweisungen, diese Maßnahmen selbsttätig eingeleitet bzw. durchgeführt werden.

In vorteilhafter Ausgestaltung kann die Vorrichtung eine Entnahmestelle für eine Probe einer Lösung, insbesondere eine Probe einer Lösung eines Reinigungsbades, und/oder einen Filter und/oder ein Ventil und/oder eine Pumpe aufweisen, so dass eine zu bestimmende Probe insbesondere gefiltert in die Messkammer eingeleitet werden kann. Somit kann völlig automatisiert eine Probe in die Messkammer der Vorrichtung eingeleitet und entsprechend selbsttätig die zu bestimmenden Bestandteile bzw. flüssigkeitsspezifische Parameter ermittelt werden.

Gemäß der Erfindung weist die Vorrichtung einen Zugang für eine Probe auf, so dass diese Probe direkt in die Messkammer eingeleitet werden kann. Bevorzugt kann dabei dieser Zugang einen Filter, ein Ventil sowie eine Pumpe aufweisen, mit der die Probe automatisiert, gefiltert und in einem zuvor durch die Pumpe einstellbarem Volumen in die Messkammer eingeleitet werden kann.

Gemäß der Erfindung weist die Vorrichtung an diesem Zugang für eine Probe eine Probeentnahmeeinheit auf, mit der aus einem evakuierten Bereich eine Probe entnommen werden und innerhalb der Probeentnahmeeinheit auf Normaldruck gebracht werden kann, ohne dabei das Vakuum des der Probe entstammenden Bereichs unterbrechen zu müssen. Damit kann die Vorrichtung auch an Anlagen mit Vakuum angeschlossen und entsprechend Proben aus dieser entnommen werden.

Um einer möglichen Kontamination der Messkammer vorzubeugen, kann die Probeentnahmeeinheit einen Sensor zur Detektion einer Trübung einer entnommenen Probe aufweisen. Damit können beispielsweise Verunreinigungen in Form von Partikeln oder sonstige Verschmutzungen bestimmt werden, bevor diese durch Einleiten der Probe in die Messkammer, in diese gelangen, was dann eine, zumeist aufwändige Reinigung der Messkammer erfordern würde, wobei dem durch den Einsatz des erwähnten Sensors zur Detektion eine möglichen Trübung entgegengewirkt werden kann.

In einer weiteren vorteilhaften Ausgestaltung kann die Vorrichtung eine Zuleitung mit einem Ventil aufweisen, sodass eine Spülflüssigkeit mittels einer Pumpe, insbesondere einer Schlauchpumpe, in die Messkammer eingeleitet werden kann. Damit kann sichergestellt werden, dass nach Durchführung einer Messung bzw. nach Einleiten einer Probe in die Messkammer, diese durch Spülen mit einer Spülflüssigkeit rückstandslos gereinigt werden kann und somit einer möglichen Kontamination einer anschließend einzuführenden Probe entgegengewirkt werden kann.

Auch kann die Vorrichtung eine Ableitung an der Messkammer aufweisen, mit der die, in der Messkammer enthaltene, Lösung, insbesondere eine Spülflüssigkeit, abgeleitet werden kann. Dies ist von Vorteil, wenn eine wiederholt automatisierte Bestimmung der Bestandteile der Probenlösung durchgeführt werden soll, da nach erfolgreicher Analyse die Messkammer gereinigt werden muss, um mögliche Rückstände innerhalb der Messkammer zu entfernen und so Messfehler bzw. eine Messungenauigkeit bei der nächsten Bestimmung zu minimieren bzw. auszuschließen. Durch den Zu- und Ablauf kann somit ein automatisierter Spülzyklus zwischen den Messungen realisiert werden. Auch kann somit eine lösungsmittelgerechte Entsorgung gewährleistet werden.

Um die zur Bestimmung der flüssigkeitsspezifischen Parametern und/oder der Bestandteile einer Probe auf die für die Bestimmung gewünschte Konzentration zu verdünnen bzw. in Lösung zu bringen, weist die Vorrichtung eine Zuleitung mit einem Ventil zur Messkammer auf, sodass nach Zuleitung einer zu bestimmenden Probe, die Probe mit wenigstens einem Lösungsmittel versetzbar ist. Somit können einphasige oder mehrphasige Systeme hergestellt werden, in denen sich je nach zu untersuchender Probe unterschiedliche flüssigkeitsspezifische Parameter in den jeweiligen Phasen ergeben bzw. unterschiedliche Bestandteile der Probe jeweils in den unterschiedlichen Phasen gelöst werden.

Dies ist insbesondere dann der Fall, wenn die Bestandteile beispielsweise nicht wasserlöslich sind, jedoch in organischen Lösungsmittel gelöst werden können und sich somit, abhängig von den verwendeten Lösungsmittel, sowohl eine wässrige als auch eine organische Phase ausbilden kann, womit also eine Flüssig-Flüssig-Extraktion innerhalb der Messkammer durchgeführt werden kann.

In einer vorteilhaften Ausgestaltung können die Pumpen in Form von Mikrodosierpumpen realisiert sein, mit denen bevorzugt ein Minimalvolumen von bis zu 5 µL gefördert werden kann. Somit kann eine exakte Zugabe wenigstens eines Lösungsmittels bzw. die Zugabe einer definierten Menge eines Indikators und/oder eines Reagenzes ermöglicht werden, womit im Ergebnis die Genauigkeit der Bestimmung mittels der Auswertung der aufgenommenen Daten durch die RGB-Kamera gesteigert wird.

Um die Intensität der auftretenden Farbe bzw. der Farbänderung zu steigern bzw. anzugleichen, kann die Vorrichtung in Richtung der RGB-Kamera eine Lichtquelle aufweisen, die paralleles Licht ausstrahlt. In einer bevorzugten Ausgestaltung kann die Lichtquelle derart vor der Messkammer positioniert sein, dass der Brennpunkt des eingestreuten, parallelen Lichts auf Höhe der RGB-Kamera ist. Hiermit kann sichergestellt werden, dass sämtliches, emittiertes Licht der Lösung von der RGB-Kamera erfasst wird.

Bevorzugt kann dabei die Lichtquelle aus wenigstens einem LED aufgebaut sein, wobei besonders bevorzugt die Lichtquellen in einem regelmäßigen Abstand, bevorzugt von jeweils 5 mm, angeordnet sind.

In einer weiteren vorteilhaften Ausgestaltung kann die Vorrichtung einen Magnetrührer und/oder einen Schüttler aufweisen, so dass die Lösung innerhalb der Messkammer homogen gemischt werden kann. Der Magnetrührer kann dabei einen, innerhalb der Messkammer angeordneten Magnetrührfisch bewegen, so dass eine homogene Mischbarkeit der Lösung gewährleistet werden kann. Der Magnetrührfisch hat darüber hinaus den Vorteil, dass dieser einfach aus der Messkammer entnommen und ggf. ersetzt werden kann. Auch kann ein Schüttler an der Messkammer angeordnet sein, wobei durch die Rüttel- bzw. Schüttelbewegung des Schüttlers ebenfalls eine homogene Mischung der Lösung gewährleistet ist. Der Schüttler hat gegenüber dem Magnetrührer den Vorteil, dass keine weiteren Teile innerhalb der Messkammer vorhanden sein müssen, an welchen sich ggf. Rückstände ablagern könnten und somit die Reinigung der Messkammer erschweren könnten.

Damit die Vorrichtung auch für brennbare Lösungen, insbesondere leicht entflammbare, häufig ebenfalls einen niedrigen Dampfdruck aufweisende Lösungsmittel, sowie für wassergefährdende Lösungsmittel, insbesondere für chlorierte Lösungsmittel, z.B. Perchlorethylen oder Trichlorethylen, genutzt werden kann, kann die Vorrichtung aus lösungsmittelbeständigen Materialien, insbesondere Glas, Stahl, Stahllegierungen oder Kunststoff, bestehen, die sowohl für organische Lösungsmittel also für wässrige Lösungen, insbesondere für saure bzw. basische Lösungen, geeignet sind.

In einer bevorzugten Ausgestaltung kann die Vorrichtung direkt in eine Anlage, insbesondere in ein Reinigungsbad, eine Reinigungsanlage oder eine Dampfentfettungsanlage, integriert werden. Somit kann eine völlig automatisierte Probenentnahme, Probenmessung sowie der Entsorgung der bei der durchgeführten Analyse verwendeten Materialien gewährleistet werden, ohne dabei manuell eine Probe aus der Anlage entnehmen zu müssen, wobei dies im Stand der Technik bisher meist damit verbunden war, dass eine laufende Anlage kurzzeitig gestoppt werden muss, um die entsprechende Probe aus der Anlage entnehmen zu können. Diese Unterbrechung wird durch die Integration der Vorrichtung in ein bestehendes Anlagensystem obsolet und eine regelmäßige Kontrolle der Qualität der innerhalb der Anlage verwendeten Lösungsmittel bzw. deren gelösten Bestandteile kann gewährleistet werden, ohne dabei eine entsprechende Unterbrechung des Betriebs der Anlage notwendig zu machen.

In weiterer Ausgestaltung weist Vorrichtung ein Display auf, mit dem insbesondere die durch die Messung der Bestandteile einer Probe ermittelten Daten bzw. bereits konkrete Handlungsanweisung anzeigbar sind, beispielsweise ob, welche und wie viele Stabilisatoren zu einem Reinigungsbad, von welchem die Probe entnommen wurde, hinzugegeben werden sollten, um dieses Reinigungsbad zu stabilisieren. Auch können über das Display selbst Handlungsanweisungen an die Vorrichtung gegeben werden, insbesondere kann der Reinigungsvorgang der Messkammer der Vorrichtung durch das Display manuell durchgeführt werden. Dies hat den Vorteil, dass auch weiterhin ein Eingreifen durch einen Anwender selbst bei vollständiger Automatisierung der Vorrichtung gewährleistet werden kann. In abermals verbesserter Ausführung werde dabei die erfassten Daten und/oder ausgewerteten Daten drahtgebunden und/oder drahtlos über ein Netzwerk abgefragt und weiterverarbeitet.

Weiterhin stellt die Erfindung ein Verfahren bereit, mit der die flüssigkeitsspezifischen Parametern und/oder die Bestandteile einer Probe mit einer der vorstehenden beschriebenen Vorrichtung bestimmt werden können. Dieses Verfahren zeichnet sich dadurch aus, dass zu einer Probe ein auf die zu untersuchenden Bestandteile bzw. flüssigkeitsspezifischen Parametern abgestimmter Indikator mittels einer Titrationseinheit zugegeben wird. Durch die Zugabe des Indikators in die vorliegende Lösung innerhalb der Messkammer ergibt sich eine Farbe, die mittels der RGB-Kamera erfasst werden kann.

Nach Auftritt der charakteristischen Färbung durch Zugabe des Indikators wird ein auf den Indikator und die zu bestimmenden Bestandteil der Probe bzw. der zu bestimmenden flüssigkeitsspezifischen Parametern abgestimmtes Reagenz ebenfalls durch die Titrationseinheit hinzugegeben und die dabei durch die Zugabe des Reagenz auftretende Farbänderung innerhalb der Probenlösung mittels der RGB-Kamera detektiert. Die so erhaltenen Daten durch die RGB-Kamera werden anschließend an einer Referenzdatenbank gesendet und mit dieser verglichen, sodass basierend auf der Auswertung, also dem Vergleich der gemessenen Daten mit den Daten in der Referenzdatenbank, Handlungsanweisungen, ggf. selbsttätig mit einem Sprachmodul, ausgegeben werden können.

In einer vorteilhaften Ausführung wird die Probe mit wenigstens einem, auf die zu untersuchenden Bestandteile bzw. den flüssigkeitsspezifischen Parametern, auf den verwendeten Indikator sowie das verwendete Reagenz abgestimmtes Lösungsmittel versetzt. Dabei können auch mehrere, unterschiedliche Lösungsmittel zum Einsatz kommen, sodass sich auch mehrere Phasen innerhalb der Messkammer ausbilden, wobei in diesen unterschiedlichen Phasen durchaus unterschiedlich, gelöste Bestandteile bzw. flüssigkeitsspezifische Parameter vorliegen, die jeweils für sich detektiert werden können.

In einer bevorzugten Ausführung wird die Zugabe durch Abgleich des mittels einer Pumpe geförderten Volumens, des wenigstens einen Lösungsmittels mit dem durch die RGB-Kamera bestimmten Füllstand innerhalb der Messkammer überprüft. Somit kann durch die redundante Prüfung sichergestellt werden, dass die durch die Pumpe, bevorzugt einer Mikrodosierpumpe, geförderte Menge des wenigstens einen Lösungsmittels, auch der tatsächlich zu fördernden Menge entspricht.

In einer weiteren vorteilhaften Ausgestaltung des Verfahrens kann bei mehrphasigen Systemen nach Zugabe eines, auf die zu bestimmenden Bestandteile bzw. der zu bestimmenden flüssigkeitsspezifischen Parametern abgestimmten Indikators und/oder eines Reagenzes, mittels eines Rührers die Phasen für eine auf die vorliegenden Lösungsmittel und des zugegebenen Indikators und/oder eines hinzugegebenen Reagenzes abgestimmte Zeit durchmischt werden. Nachdem das mehrphasige System durch den Rührer für eine bestimmte Zeit durchmischt wurde, wird das Rühren für eine bestimmte Zeit ausgesetzt, sodass keine Durchmischung stattfindet, sondern sich die Phasen wieder vollständig ausbilden können. Hierdurch kann sichergestellt werden, dass auch bei mehrphasigen System eine homogene Verteilung der zu untersuchenden Bestandteile bzw. der flüssigkeitsspezifischen Parametern und/oder eine vollständige Lösung der zu untersuchenden Bestandteile bzw. flüssigkeitsspezifischen Parametern der Probe bei Verwendung von mehr als einem Lösungsmittel gewährleistet wird.

Bevorzugt wird die Ermittlung der für die Auswertung benötigten Daten durch die RGB-Kamera nach Beendigung der Durchmischung durch einen Rührer durchgeführt. Dabei erfolgt zunächst nach Zugabe eines auf die zu bestimmenden Bestandteile abgestimmten Indikators und/oder eines Reagenzes zu Probenlösung eine Durchmischung der Probenlösung, um eine homogene Verteilung des hinzugegebenen Indikators und/oder Reagenzes gewährleisten zu können. Schließlich kann die sich nach Zugabe des Indikators ergebende Farbe bzw. die sich durch die Hinzugabe des Reagenzes ergebende Farbänderung der homogen durchmischten Lösung durch die RGB-Kamera erfasst werden.

In einer weiteren vorteilhaften Ausgestaltung des Verfahrens wird nach Bestimmung der flüssigkeitsspezifischen Parametern und/oder nach Bestimmung der Bestandteile der Probe die innerhalb der Messkammer befindliche Lösung abgeleitet und die Messkammer mit einer Spülflüssigkeit gespült, sodass gewährleistet werden kann, dass keinerlei Rückstände innerhalb der Messkammer der zuvor durchgeführten Messung mehr vorhanden sind, die eventuell zu einer fehlerhaften Analyse der darauffolgenden Messung führen könnten.

Damit nach Spülung der Messkammer mit einer Spülflüssigkeit gewährleistet werden kann, dass keine Rückstände mehr in der Messkammer vorhanden sind, kann in vorteilhafter Ausgestaltung eine Flüssigkeit, insbesondere eine Probe oder eine sonstige Flüssigkeit, in die Messkammer eingeleitet werden, mit welcher eine Nullpunktbestimmung durchgeführt wird. Sollte bei der Nullpunktbestimmung festgestellt werden, dass die Messkammer nicht völlig rückstandsfrei gesäubert wurde, so wird diese nochmals mit einer Spülflüssigkeit gespült, wiederum eine Nullpunktbestimmung durchgeführt und dieser Vorgang solange wiederholt, bis keine Rückstände mehr in der Messkammer vorhanden sind.

Um eine Kalibrierung bzw. Justierung der Vorrichtung durchzuführen, kann nach Spülung der Messkammer einer Referenzlösung in die Messkammer eingeleitet werden, wobei diese Referenzlösung vordefinierte Bestandteile bzw. flüssigkeitsspezifische Parameter enthält, um mit dieser eine Justierung bzw. Kalibrierung der Vorrichtung durchführen zu können. Damit kann sichergestellt werden, dass die gemessenen Daten der zu untersuchenden Proben den tatsächlichen Parametern entspricht.

Die zuvor beschriebene Erfindung wird nachstehend anhand eines Ausführungsbeispiels näher erläutert.

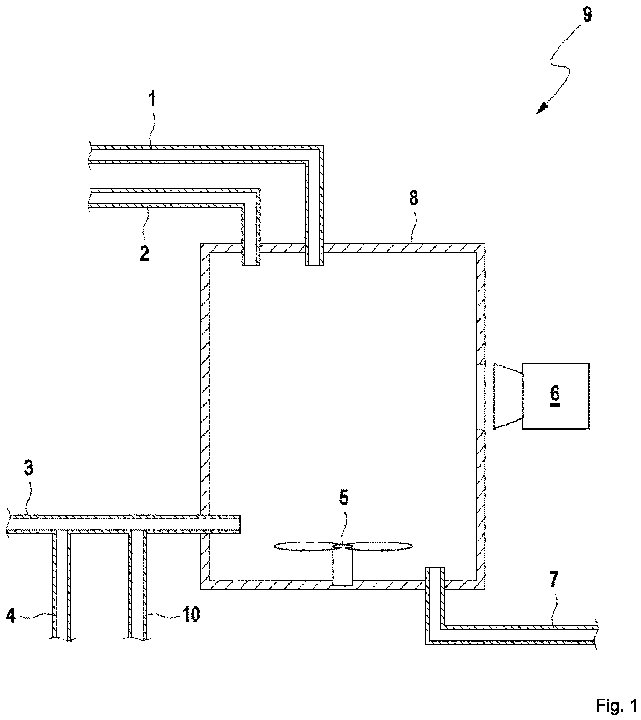

Es zeigt
- Fig. 1: einen Querschnitt einer schematischen Darstellung eines Ausführungsbeispiels in einer Seitenansicht.

Figur 1 zeigt einen Querschnitt einer schematischen Darstellung eines Ausführungsbeispiels einer Vorrichtung 9 in einer Seitenansicht.

Die in Figur 1 gezeigte Vorrichtung 9 weist dabei eine Messkammer 8 auf, wobei am unteren Boden der Messkammer 8 ein, mit der Messkammer 8 verbundener Rührer 5 angeordnet ist. Über die Probenentnahmeleitung 3 ist eine Probe, die beispielsweise zuvor aus einem Reinigungsbad entnommen wurde, in die Messkammer 8 einleitbar. Anschließend ist nach Einleitung der Probe über die Probenentnahmeleitung 3 in die Messkammer 8, die Probe mit Hilfe einer Verdünnungslösung aus der Verdünnungsleitung 10 auf die gewünschte Lösungsmenge innerhalb der Messkammer 8 verdünnbar. Nach entsprechender Verdünnung ist mittels der Indikatorleitung 2 einer Titrationseinheit ein, für die zu untersuchenden Bestandteile innerhalb der Probenlösung entsprechender, Indikator in der Lösung hinzufügbar. Um stets eine homogene Mischung der zu untersuchenden Probenlösung zu gewährleisten, insbesondere nach Zugabe eines Indikators über die Indikatorleitung 2, wird die Lösung dauerhaft bzw. bei mehrphasigen Systemen im Intervall durch den innerhalb der Messkammer 8 am Boden angeordneten Rührer 5 gerührt.

Auf die Zugabe des Indikators folgend, wird mittels einer, außerhalb der Messkammer 8 angeordnete RGB-Kamera 6 die Farbe der Lösung detektiert, wobei nach jeder Zugabe eines entsprechend auf die zu untersuchenden Bestandteile der Probenlösung abgestimmtes Reagenz über die Reagenzleitung 1 zur homogen durchmischten Lösung, jeweils die Daten, insbesondere in Form eines Bildes, der sich farblich ändernden Lösung mittels der RGB-Kamera 6 aufgenommen wird.

Die so erhaltenen Daten, insbesondere Bilder, werden anschließend von der RGB-Kamera 6 an eine hier nicht weiter dargestellten Rechnereinheit übermittelt, innerhalb derer die aufgenommen Daten mit Referenzdaten verglichen werden, so dass basierend auf der Auswertung der aufgenommenen Daten mit den Referenzdaten, Handlungsanweisung von der Vorrichtung 9, beispielsweise durch ein hier nicht weiter dargestelltes Display, ausgegeben wird bzw. von der Vorrichtung 9 automatisiert durchgeführt werden, beispielsweise durch Zugabe von Stabilisierungsmitteln zu dem Reinigungsbad, aus dem zuvor die Probe entnommen wurde.

Nach Beendigung der Messung ist die Probenlösung, bestehend aus dem zur Verdünnung genutzten Lösungsmittel, der mit Lösungsmittel versetzten Probe, dem hinzugefügten Indikator und dem hinzugefügten Reagenz, durch eine Auslassleitung 7 aus der Messkammer 8 ableitbar.

Um mögliche Rückstände der Probenlösung aus der Messkammer 8 zu entfernen und somit die Kontamination einer weiteren, sich an die erste Messung anschließende Messung zu verhindern, ist mittels der Spülflüssigkeitsleitung 4 sowohl die Probenentnahmeleitung 3, die Verdünnungsleitung 10 als auch die Messkammer 8 als solche spülbar und somit reinigbar, wobei ebenfalls die Spülflüssigkeit durch die Auslassleitung 7 aus der Messkammer 8 ableitbar ist. Nach erfolgreicher Spülung der Messkammer 8, der Probenentnahmeleitung 3 sowie der Verdünnungsleitung 10, ist die Vorrichtung 9 zur erneuten Messung einer Probe vorbereitet.

Somit ist vorstehend eine Vorrichtung offenbart, mit welcher flüssigkeitsspezifische Parameter bzw. Bestandteile einer Probe automatisiert festgestellt und Handlungsanweisungen ausgegeben bzw. bevorzugt selbsttätig durchgeführt werden können.

### BEZUGSZEICHENLISTE

- 1: Reagenzleitung
- 2: Indikatorleitung
- 3: Probenentnahmeleitung
- 4: Spülflüssigkeitsleitung
- 5: Rührer
- 6: RGB-Kamera
- 7: Auslassleitung
- 8: Messkammer
- 9: Vorrichtung
- 10: Verdünnungsleitung

## Patentansprüche

1. Vorrichtung (9) zur Bestimmung von flüssigkeitsspezifischen Parametern und/oder Bestandteilen einer Probe in einer Messkammer unter Verwendung einer Titrationseinheit, eines Indikators, eines Reagenzes, sowie einer Messkammer (8), welche eine außerhalb der Messkammer (8) angeordnete RGB-Kamera (6) aufweist, wobei die durch diese RGB-Kamera (6) erfassten Daten an eine Rechnereinheit übermittelbar und die in diesem Zusammenhang an die Rechnereinheit übermittelten Bilddaten mittels dieser Rechnereinheit mit einer Referenzdatenbank, vorzugsweise umfassend eine Bild- und Farbdatenbank, vergleichbar und auswertbar sind, wobei basierend auf den verglichenen und ausgewerteten Bilddaten mit der Referenzdatenbank, selbsttätig Handlungsanweisungen, vorzugsweise über ein Sprachmodul, ausgebbar sind, sowie, dass diese an der Messkammer (8) einen Zugang (3) für eine Probe aufweist und dieser Zugang (3) einen Filter und/oder eine Pumpe aufweist, insbesondere eine Schlauchpumpe, so dass die Probe , insbesondere gefiltert, in die Messkammer (8) einleitbar ist, sowie, dass der Zugang (3) eine Probeentnahmeeinheit aufweist, mit der aus einem evakuierten Bereich eine Probe entnehmbar und innerhalb der Probenentnahmeeinheit auf Normaldruck bringbar ist bevor die Probe in die Messkammer eingeleitet wird, ohne dabei das Vakuum des der Probe entstammenden Bereichs zu unterbrechen.

2. Vorrichtung gemäß Anspruch 1, **dadurch gekennzeichnet, dass** dieser Zugang (3) ein Ventil aufweist, so dass die Probe in die Messkammer (8) einleitbar ist.

3. Vorrichtung gemäß Anspruch 1 oder 2, **dadurch gekennzeichnet, dass** die Probeentnahmeeinheit einen Sensor zur Detektion einer Trübung der Probe aufweist.

4. Vorrichtung gemäß einem der vorhergehenden Ansprüche, **dadurch gekennzeichnet, dass** diese eine Zuleitung (4) aufweist, insbesondere mit einem Ventil, so dass eine Spülflüssigkeit mittels einer Pumpe, insbesondere einer Schlauchpumpe, in die Messkammer (8) einleitbar ist.

5. Vorrichtung gemäß einem der vorhergehenden Ansprüche, **dadurch gekennzeichnet, dass** diese eine Ableitung (7) an der Messkammer (8) aufweist, so dass die in der Messkammer (8) enthaltene Lösung ableitbar ist.

6. Vorrichtung gemäß einem der vorhergehenden Ansprüche, **dadurch gekennzeichnet, dass** diese eine Zuleitung (10) zur Messkammer (8) aufweist, insbesondere mit einem Ventil, so dass nach Zuleitung einer zu bestimmenden Probe in die Messkammer (8), die Probe mit wenigstens einem Lösungsmittel versetzbar ist.

7. Vorrichtung nach einem der vorhergehenden Ansprüche, **dadurch gekennzeichnet, dass** die Pumpen Mikrodosierpumpen sind, mit der bevorzugt ein Minimalvolumen von bis zu 5 µl förderbar ist.

8. Vorrichtung nach einem der vorhergehenden Ansprüche, **dadurch gekennzeichnet, dass** diese eine Lichtquelle aufweist, die in Richtung der RGB-Kamera (6) in die Messkammer (8) paralleles Licht einstrahlt.

9. Vorrichtung gemäß Anspruch 8, **dadurch gekennzeichnet, dass** die Lichtquelle derart vor die Messkammer (8) positioniert ist, dass der Brennpunkt des eingestrahlten Lichts auf Höhe der RGB-Kamera (6) ist.

10. Vorrichtung gemäß Anspruch 8 oder 9, **dadurch gekennzeichnet, dass** die Lichtquelle wenigstens eine LED umfasst.

11. Vorrichtung gemäß Anspruch 10, **dadurch gekennzeichnet, dass** die LED's der Lichtquelle in einem regelmäßigen Abstand, bevorzugt von 5 mm, angeordnet sind.

12. Vorrichtung gemäß einem der vorhergehenden Ansprüche, **dadurch gekennzeichnet, dass** diese einen Magnetrührer und/oder einen Schüttler aufweist.

13. Vorrichtung gemäß einem der vorhergehenden Ansprüche, **dadurch gekennzeichnet, dass** diese aus lösungsmittelbeständigen Materialien, insbesondere Glas, Stahl, Stahllegierungen oder Kunststoffen, besteht, sodass insbesondere sowohl organische Lösungsmittel als auch wässrige Lösungen verwendbar sind.

14. Vorrichtung gemäß einem der vorhergehenden Ansprüche, **dadurch gekennzeichnet, dass** die Vorrichtung in eine Anlage, insbesondere in ein Reinigungsbad, eine Reinigungsanlage oder eine Dampfentfettgungsanlage, integriert ist.

15. Vorrichtung gemäß einem der vorhergehenden Ansprüche, **dadurch gekennzeichnet, dass** diese ein Display aufweist, mit dem insbesondere Handlungsanweisungen anzeigbar und/oder Befehle eingebbar sind.

16. Vorrichtung gemäß einem der vorhergehenden Ansprüche, **dadurch gekennzeichnet, dass** die erfassten und/oder ausgewerteten Daten drahtgebunden und/oder drahtlos abrufbar sind.

17. Verfahren zur Bestimmung von flüssigkeitsspezifischen Parametern und/oder Bestandteilen einer Probe mit einer Vorrichtung gemäß einem der vorhergehenden Ansprüche, wobei zu einer Probe ein auf die zu untersuchenden Bestandteile und/oder flüssigkeitsspezifischen Parameter abgestimmter Indikator mittels einer Titrationseinheit hinzugegeben wird, wobei die sich durch die Hinzugabe des Indikators ergebende Farbe mittels einer RGB-Kamera (6) erfasst wird, sowie, dass ein, auf den Indikator und die zu bestimmenden Bestandteile der Probe abgestimmtes Reagenz hinzugegeben und die durch die Zugabe des Reagenz auftretende Farbänderung mittels der RGB Kamera (6) detektiert wird, wobei die so erhaltenen Daten mit einer Referenzdatenbank verglichen werden, so dass Handlungsanweisungen ausgegeben werden, wobei die Probe mit wenigstens einem auf die zu untersuchenden Bestandteile, den verwendeten Indikator sowie das verwendete Reagenz abgestimmtes Lösungsmittel versetzt wird und eine Referenzlösung in die Messkammer (8) eingeleitet wird und anhand der flüssigkeitsspezifischen Parametern und/oder Bestandteilen der Referenzlösung eine Justierung und/oder Kalibrierung der Vorrichtung (1) durchgeführt wird.

18. Verfahren gemäß Anspruch 17 mit einer Vorrichtung gemäß einem der vorhergehenden Ansprüche, **dadurch gekennzeichnet, dass** die Zugabe wenigstens eines Lösungsmittels durch Abgleich des mittels einer Pumpe geförderten Volumens mit dem durch die RGB-Kamera bestimmten Füllstands innerhalb der Messkammer überprüft wird.

19. Verfahren gemäß Anspruch 17 oder 18 mit einer Vorrichtung gemäß einem der vorhergehenden Ansprüche, **dadurch gekennzeichnet, dass** bei mehrphasigen Systemen, nach Zugabe eines auf die zu bestimmenden Bestandteile abgestimmten Indikators und/oder eines Reagenzes, mittels eines Rührers (5), die Phasen für eine auf die vorliegenden Lösungsmittel und des zugegebenen Indikators und/oder zugegebenen Reagenzes abgestimmte Zeit durchmischt werden, wobei nach dieser Zeit wiederum keine Durchmischung für eine bestimmte Zeit stattfindet, sodass die Phasen wieder vollständig ausgebildet werden.

20. Verfahren gemäß einem der Ansprüche 17 bis 19 mit einer Vorrichtung gemäß einem der vorhergehenden Ansprüche, **dadurch gekennzeichnet, dass** nach Zugabe eines auf die zu bestimmenden Bestandteile abgestimmten Indikators und/oder eines Reagenzes die Lösung mittels eines Rührers (5) durchmischt wird, bevor mittels einer RGB-Kamera (6) die sich durch Hinzugabe des Indikators ergebende Farbe bzw. die durch Hinzugabe des Reagenz ergebende Farbänderung erfasst wird.

21. Verfahren gemäß einem der Ansprüche 17 bis 20 mit einer Vorrichtung gemäß einem der vorhergehenden Ansprüche, **dadurch gekennzeichnet, dass** nach Bestimmung der flüssigkeitsspezifischen Parametern und/oder der Bestandteile die innerhalb der Messkammer (8) befindliche Lösung abgeleitet wird und die Messkammer (8) mit einer Spülflüssigkeit gespült wird.

22. Verfahren gemäß Anspruch 21 mit einer Vorrichtung gemäß einem der vorhergehenden Ansprüche, **dadurch gekennzeichnet, dass** nach Spülung der Messkammer durch Einleiten einer Flüssigkeit, vorzugsweise eine Probe, in die Messkammer eine Nullpunktbestimmung durchgeführt wird.

## Claims

1. Device (9) for determining liquid-specific parameters and/or components of a sample in a measurement chamber using a titration unit, an indicator, a reagent and a measurement chamber (8) which has an RGB camera (6) arranged outside the measurement chamber (8), wherein the data recorded by this RGB camera (6) can be transmitted to a computer unit and the image data transmitted in this context to the computer unit can be compared and evaluated by means of this computer unit with a reference database, preferably comprising an image and color database, wherein based on the image data compared and evaluated with the reference database, instructions can be automatically output, preferably via a voice module, and wherein this device has an access (3) for a sample on the measurement chamber (8) and this access (3) has a filter and/or a pump, in particular a peristaltic pump, so that the sample can be introduced into the measurement chamber (8) in particular in a filtered manner, and wherein the access (3) has a sampling unit with which a sample can be taken from an evacuated region and brought to normal pressure within the sampling unit before the sample is introduced into the measurement chamber, without interrupting the vacuum of the region originating from the sample.

2. Device according to claim 1, **characterized in that** this access (3) has a valve, so that the sample can be introduced into the measurement chamber (8).

3. Device according to either claim 1 or claim 2, **characterized in that** the sampling unit has a sensor for detecting turbidity of the sample.

4. Device according to any of the preceding claims, **characterized in that** it has a feed line (4), in particular having a valve, so that a rinsing liquid can be introduced into the measurement chamber (8) by means of a pump, in particular a peristaltic pump.

5. Device according to any of the preceding claims, **characterized in that** it has a discharge line (7) on the measurement chamber (8), so that the solution contained in the measurement chamber (8) can be discharged.

6. Device according to any of the preceding claims, **characterized in that** it has a feed line (10) to the measurement chamber (8), in particular having a valve, so that after a sample to be determined has been fed into the measurement chamber (8), the sample can be mixed with at least one solvent.

7. Device according to any of the preceding claims, **characterized in that** the pumps are microdosing pumps with which a minimum volume of up to 5 µl can preferably be conveyed.

8. Device according to any of the preceding claims, **characterized in that** it has a light source which radiates parallel light into the measurement chamber (8) in the direction of the RGB camera (6).

9. Device according to claim 8, **characterized in that** the light source is positioned in front of the measurement chamber (8) in such a way that the focal point of the radiated light is at the level of the RGB camera (6).

10. Device according to either claim 8 or claim 9, **characterized in that** the light source comprises at least one LED.

11. Device according to claim 10, **characterized in that** the LEDs of the light source are arranged at a regular distance, preferably of 5 mm.

12. Device according to any of the preceding claims, **characterized in that** it has a magnetic stirrer and/or a shaker.

13. Device according to any of the preceding claims, **characterized in that** it consists of solvent-resistant materials, in particular glass, steel, steel alloys or plastics materials, so that in particular both organic solvents and aqueous solutions can be used.

14. Device according to any of the preceding claims, **characterized in that** the device is integrated into a system, in particular in a cleaning bath, a cleaning system or a vapor degreasing system.

15. Device according to any of the preceding claims, **characterized in that** it has a display with which in particular instructions can be displayed and/or commands can be entered.

16. Device according to any of the preceding claims, **characterized in that** the recorded and/or evaluated data can be called up in a wired and/or wireless manner.

17. Method for determining liquid-specific parameters and/or components of a sample using a device according to any of the preceding claims, wherein an indicator matched to the components to be examined and/or liquid-specific parameters is added to a sample by means of a titration unit, wherein the color resulting from the addition of the indicator is recorded by means of an RGB camera (6), and wherein a reagent matched to the indicator and the components of the sample to be determined is added and the color change occurring due to the addition of the reagent is recorded by means of the RGB camera (6), wherein the data obtained in this way are compared with a reference database so that instructions are output, wherein the sample is mixed with at least one solvent that is matched to the components to be examined, the indicator used and the reagent used, and a reference solution is introduced into the measurement chamber (8) and the device (1) is adjusted and/or calibrated on the basis of the liquid-specific parameters and/or components of the reference solution.

18. Method according to claim 17 using a device according to any of the preceding claims, **characterized in that** the addition of at least one solvent is checked by comparing the volume conveyed by means of a pump with the filling level determined by the RGB camera within the measurement chamber.

19. Method according to either claim 17 or claim 18 using a device according to any of the preceding claims, **characterized in that** in multiphase systems, after adding an indicator and/or a reagent matched to the components to be determined, the phases for a time matched to the solvents present and the added indicator and/or added reagent are mixed by means of a stirrer (5), after which time no mixing takes place again for a certain time, so that the phases are completely developed again.

20. Method according to any of claims 17 to 19 using a device according to any of the preceding claims, **characterized in that** after the addition of an indicator and/or a reagent matched to the components to be determined, the solution is mixed by means of a stirrer (5) before the color resulting from the addition of the indicator or the color change resulting from the addition of the reagent is recorded by means of an RGB camera (6).

21. Method according to any of claims 17 to 20 using a device according to any of the preceding claims, **characterized in that** after determining the liquid-specific parameters and/or the components, the solution located within the measurement chamber (8) is discharged and the measurement chamber (8) is rinsed with a rinsing liquid.

22. Method according to claim 21 using a device according to any of the preceding claims, **characterized in that** after the measurement chamber has been rinsed, a zero point determination is carried out by introducing a liquid, preferably a sample, into the measuring chamber.

## Revendications

1. Dispositif (9) de détermination de paramètres et/ou de constituants spécifiques à un liquide d'un échantillon dans une chambre de mesure à l'aide d'une unité de titrage, d'un indicateur, d'un réactif et d'une chambre de mesure (8), lequel dispositif présente une caméra RVB (6) disposée à l'extérieur de la chambre de mesure (8), les données enregistrées par ladite caméra RVB (6) pouvant être transmises à une unité informatique et les données d'image transmises dans ce contexte à l'unité informatique pouvant être comparées et évaluées au moyen de ladite unité informatique avec une base de données de référence comprenant de préférence une base de données d'images et de couleurs, des instructions de traitement automatiques pouvant être émises, de préférence par l'intermédiaire d'un module vocal, sur la base des données d'images comparées et évaluées avec la base de données de référence, et le dispositif présentant un accès (3) destiné à un échantillon au niveau de la chambre de mesure (8) et ledit accès (3) présentant un filtre et/ou une pompe, en particulier une pompe à tuyau, de sorte que l'échantillon, en particulier filtré, peut être introduit dans la chambre de mesure (8), et l'accès (3) présentant une unité d'échantillonnage au moyen de laquelle un échantillon peut être prélevé dans une zone évacuée et peut être amené à pression normale à l'intérieur de l'unité d'échantillonnage avant l'introduction de l'échantillon dans la chambre de mesure, sans rompre le vide de la zone dont provient l'échantillon.

2. Dispositif selon la revendication 1, **caractérisé en ce que** ledit accès (3) présente une vanne, de sorte que l'échantillon peut être introduit dans la chambre de mesure (8).

3. Dispositif selon la revendication 1 ou 2, **caractérisé en ce que** l'unité d'échantillonnage présente un capteur permettant de détecter la turbidité de l'échantillon.

4. Dispositif selon l'une des revendications précédentes, **caractérisé en ce qu'**il présente une conduite d'alimentation (4), en particulier dotée d'une vanne, de sorte qu'un liquide de rinçage peut être introduit dans la chambre de mesure (8) au moyen d'une pompe, en particulier d'une pompe à tuyau.

5. Dispositif selon l'une des revendications précédentes, **caractérisé en ce qu'**il présente une conduite d'évacuation (7) au niveau de la chambre de mesure (8), de sorte que la solution contenue dans la chambre de mesure (8) peut être évacuée.

6. Dispositif selon l'une des revendications précédentes, **caractérisé en ce qu'**il présente une conduite d'alimentation (10) vers la chambre de mesure (8), en particulier dotée d'une vanne, de sorte qu'après qu'un échantillon à déterminer a été alimenté vers la chambre de mesure (8), l'échantillon peut subir une dislocation avec au moins un solvant.

7. Dispositif selon l'une des revendications précédentes, **caractérisé en ce que** les pompes sont des pompes microdoseuses au moyen desquelles un volume minimal jusqu'à 5 µl peut de préférence être transporté.

8. Dispositif selon l'une des revendications précédentes, **caractérisé en ce qu'**il présente une source lumineuse qui projette une lumière parallèle dans la chambre de mesure (8) en direction de la caméra RVB (6).

9. Dispositif selon la revendication 8, **caractérisé en ce que** la source lumineuse est positionnée devant la chambre de mesure (8) de telle sorte que le foyer de la lumière projetée se trouve au niveau de la caméra RVB (6).

10. Dispositif selon la revendication 8 ou 9, **caractérisé en ce que** la source lumineuse comprend au moins une DEL.

11. Dispositif selon la revendication 10, **caractérisé en ce que** les DEL de la source lumineuse sont disposées à une distance régulière, de préférence de 5 mm.

12. Dispositif selon l'une des revendications précédentes, **caractérisé en ce qu'**il présente un agitateur magnétique et/ou un secoueur.

13. Dispositif selon l'une des revendications précédentes, **caractérisé en ce qu'**il est constitué de matériaux résistants aux solvants, en particulier de verre, d'acier, d'alliages d'acier ou de matières plastiques, de sorte qu'en particulier aussi bien des solvants organiques que des solutions aqueuses peuvent être utilisés.

14. Dispositif selon l'une des revendications précédentes, **caractérisé en ce que** le dispositif est intégré dans un système, en particulier dans un bain de nettoyage, un système de nettoyage ou un système de dégraissage à la vapeur.

15. Dispositif selon l'une des revendications précédentes, **caractérisé en ce qu'**il présente un affichage permettant en particulier d'afficher des instructions de traitement et/ou d'entrer des commandes.

16. Dispositif selon l'une des revendications précédentes, **caractérisé en ce que** les données enregistrées et/ou évaluées peuvent être appelées de manière filaire et/ou sans fil.

17. Procédé de détermination de paramètres et/ou de constituants spécifiques à un liquide d'un échantillon avec un dispositif selon l'une des revendications précédentes, un indicateur adapté aux constituants à examiner et/ou aux paramètres spécifiques à un liquide étant ajouté à un échantillon au moyen d'une unité de titrage, la couleur résultant de l'ajout de l'indicateur étant détectée à l'aide d'une caméra RVB (6), et un réactif adapté à l'indicateur et aux constituants à déterminer étant ajouté à l'échantillon et le changement de couleur résultant de l'ajout du réactif étant détecté à l'aide de la caméra RVB (6), les données ainsi obtenues étant comparées à une base de données de référence de sorte que des instructions de traitement peuvent être émises,
l'échantillon subissant une dislocation avec au moins un solvant adapté aux constituants à examiner, à l'indicateur utilisé et au réactif utilisé, et une solution de référence étant introduite dans la chambre de mesure (8) et un réglage et/ou un étalonnage du dispositif (1) étant effectué sur la base des paramètres et/ou constituants spécifiques à un liquide de la solution de référence.

18. Procédé selon la revendication 17 avec un dispositif selon l'une des revendications précédentes, **caractérisé en ce que** l'ajout d'au moins un solvant est contrôlé en comparant le volume transporté au moyen d'une pompe avec le niveau de remplissage déterminé par la caméra RVB à l'intérieur de la chambre de mesure.

19. Procédé selon la revendication 17 ou 18 avec un dispositif selon l'une des revendications précédentes, **caractérisé en ce que** dans des systèmes multiphasiques, après ajout d'un indicateur et/ou d'un réactif adaptés aux constituants à déterminer, au moyen d'un agitateur (5), les phases sont mélangées durant un temps adapté aux solvants présents et à l'indicateur ajouté et/ou au réactif ajouté, aucun mélange n'ayant lieu à nouveau pendant un certain temps après ledit temps, de sorte que les phases se reforment complètement.

20. Procédé selon l'une des revendications 17 à 19 avec un dispositif selon l'une des revendications précédentes, **caractérisé en ce qu'**après l'ajout d'un indicateur et/ou d'un réactif adaptés aux constituants à déterminer, la solution est mélangée au moyen d'un agitateur (5), avant que la couleur résultant de l'ajout de l'indicateur ou le changement de couleur résultant de l'ajout du réactif soit enregistré au moyen d'une caméra RVB (6).

21. Procédé selon l'une des revendications 17 à 20 avec un dispositif selon l'une des revendications précédentes, **caractérisé en ce qu'**après détermination des paramètres et/ou des constituants spécifiques à un liquide, la solution située à l'intérieur de la chambre de mesure (8) est évacuée et la chambre de mesure (8) est rincée avec un liquide de rinçage.

22. Procédé selon la revendication 21 avec un dispositif selon l'une des revendications précédentes, **caractérisé en ce qu'**après le rinçage de la chambre de mesure, un point zéro est déterminé en introduisant un liquide, de préférence un échantillon, dans la chambre de mesure.
